# EUROPEAN PATENT APPLICATION

(11) **EP 4 310 306 A1**
(43) Date of publication of application: **24.01.2024**
(21) Application number: 23179936.2
(22) Date of filing: 19.06.2023
(51) Int. Cl.: F02C 7/06, F01D 25/18, F02C 7/16, F02C 7/36

(54) **AIRCRAFT PROPULSION SYSTEM**

(30) Priority: 18.07.2022 GB 202210506
(71) Applicant: Rolls-Royce plc, London N1 9FX (GB)
(72) Inventor: Yang, Jingbin, Derby, DE24 8BJ (GB)
(74) Representative: Rolls-Royce plc

(57) **Abstract**

An oil system (30) for an aircraft propulsion system (5). The aircraft propulsion system comprises a motor (10) configured to drive a propulsor (12) via a reduction gearbox (16). The oil system comprises a first feed line (40) configured to supply cooling oil to the reduction gearbox (16), a second feed line (42) configured to supply cooling oil to a further oil cooled component (36, 10, 26), and
an air-cooled oil cooler (38). The air-cooled oil cooler (38) is provided upstream of the first feed line (40) to provide cooled oil to the reduction gearbox (16); and
the second feed line (42) is configured to bypass the air-cooled oil cooler (38) to cool the further oil cooled component (36, 10, 26).

## Description

The present disclosure concerns an oil system for a propulsion system for an aircraft and an aircraft comprising the propulsion system.

Electric aircraft have been proposed, which may provide both economic and environmental benefits compared to traditional hydrocarbon fuelled aircraft.

According to a first aspect there is provided an oil system for an aircraft propulsion system, the aircraft propulsion system comprising:
a motor configured to drive a propulsor via a reduction gearbox, wherein the oil system comprises:
a first feed line configured to supply cooling oil to the reduction gearbox;
a second feed line configured to supply cooling oil to a further oil cooled component; and
an air-cooled oil cooler; wherein
the air-cooled oil cooler is provided upstream of the first feed line to provide cooled oil to the reduction gearbox; and
the second feed line is provided upstream is configured to bypass the air-cooled oil cooler to cool the further oil cooled component.

It has been found that the reduction gearbox typically requires a lower oil temperature than other oil cooled components in a motor driven aircraft propulsion system. Consequently, by providing a system in which the oil flow to the other cooled components bypasses the oil cooler, the oil cooler can cool oil to a lower temperature required by the reduction gearbox, without requiring an excessively large oil cooler.

The oil system may comprise a closed-loop oil system comprising an oil reservoir. The oil system may comprise a return line configured to provide heated oil from one or more oil cooled component to the oil reservoir.

The oil system may comprise an oil pump configured to provide oil flow through the system.

The oil system may comprise one or more additional heat exchangers. For example, the oil system may comprise an auxiliary heat exchanger provided upstream of the first and second feed line, and configured to cool all one or more cooled components. The auxiliary heat exchanger may comprise a bypass line arranged to optionally bypass oil flow around the auxiliary heat exchanger.

The air-cooled oil cooler may comprise a surface oil cooler.

According to a second aspect of the invention there is provided an aircraft propulsion system comprising an oil system in accordance with the first aspect.

The reduction gearbox may comprise an epicyclic gearbox such as a planetary or a star gearbox. The epicyclic gearbox may comprise a sun gear, a plurality of planet gears and a ring gear, wherein the sun gear intermeshes with the planet gears, and the planet gears intermesh with the ring gear.

The planet gears may be rotatably mounted to a planet carrier by a respective oil lubricated journal bearing.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
**Figure 1** is a plan view of a first aircraft comprising a parallel hybrid propulsion system;
**Figure 2** is a schematic diagram of an electric propulsion system for the aircraft of figure 1;
**Figure 3** is a cross-sectional drawing of a reduction gearbox of the propulsion system of figure 2;
**Figure 4** is a schematic diagram of an oil system for the propulsion system of figure 2; and
**Figure 5** is a schematic diagram of an alternative oil system for the propulsion system of figure 2.

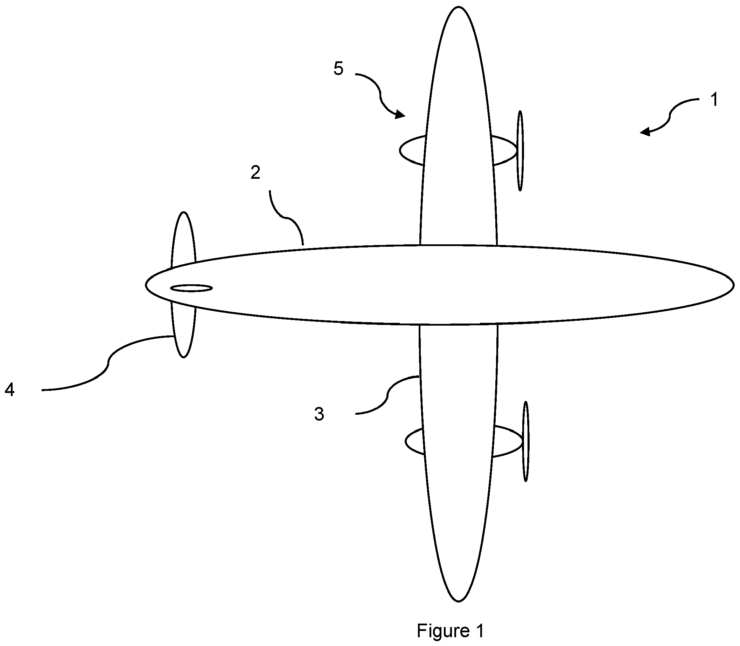

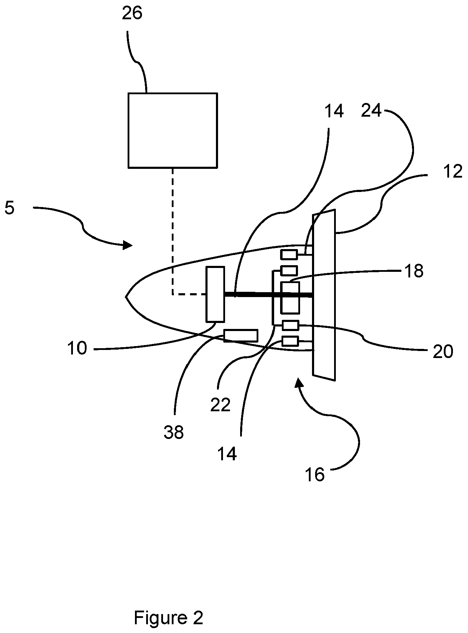

With reference to Figure 1, an aircraft 1 is shown. The aircraft is of conventional configuration, having a fuselage 2, wings 3, tail 4 and a pair of propulsion systems 5. One of the propulsion systems 5 is shown in figure detail in figure 2.

Figure 2 shows the propulsion system 5 schematically. The propulsion system 5 includes one or more electrical machines 10 configured to drive one or more propulsors. In particular, the system 5 comprises an electric motor 10. The motor 10 is of a conventional type, such as an induction or permanent magnet electric machine, and is configured to drive a propulsor such as an open rotor propeller 12 or ducted fan. In the present embodiment, the motor 10 is coupled to the propeller 12 via a shaft 14. In this embodiment, the electric motor 10 is of a "core shaft mounted" type, in which a rotor (not shown) of the motor 10 is mounted directly to a surface of the low-pressure shaft 14, and is surrounded by a stator provided radially outwardly of the rotor. Alternatively, the motor may be mounted directly to the engine casing, and is driven by a tower shaft. The stator comprises electrical windings (not shown), which can be energised to produce a rotating magnetic field. This rotating magnetic field interacts with a magnetic field of the rotor, to cause rotation when acting as a motor.

The motor 10 is coupled to the propeller 12 via a reduction gearbox 16. The reduction gearbox could take any suitable form, and is configured to receive a driving input from the motor 10 via input shaft 14, and drive the propeller 12 at a lower rotational speed than the input shaft 14. In this embodiment, the reduction gearbox 16 comprises an epicyclic gearbox in the form of a star gearbox.

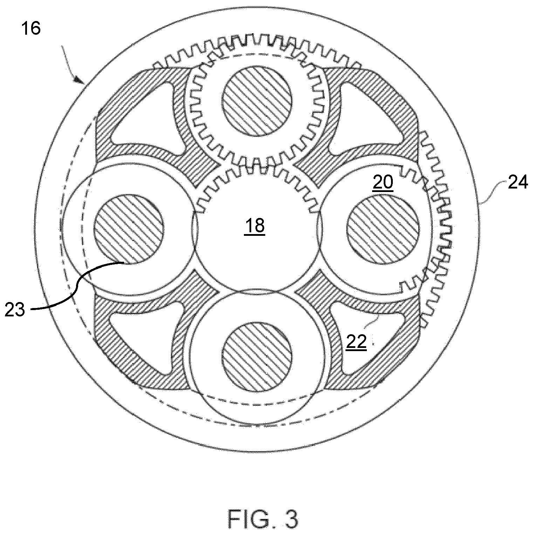

The star gearbox is shown in more detail in figure 3, and comprises an input gear coupled to the input shaft 14 in the form of a sun gear 18. The sun gear meshes with and drives a plurality of planet gears 20 which are provided radially outward of the sun gear, and are rotatably mounted in a planet carrier 22 by journal bearings 23, which are provided with lubricating oil. The planet carrier 22 is statically mounted to prevent orbital rotation of the planet gears 20. The planet gears 20 in turn mesh with an annular ring gear 24 provided radially outward of the planet gears. The ring gear is mounted to provide rotation in use, and is coupled to the propeller 12 via an output shaft 24 to thereby drive the propeller at a lower rotational speed than the input shaft 14.

The electric motor 10 is coupled to an electrical energy system configured to provide electrical power to the motor 10. In the present embodiment, the electrical energy system comprises an energy storage device 26 in the form of one or more of a chemical battery, fuel cell, and capacitor, which provides the electric motor 10 with electrical power during operation. In some cases, multiple energy storages systems, which may be of different types (chemical battery, fuel cell etc) may be provided for each propulsion system 5. In other cases, a common energy storage device 26 may be provided for multiple propulsion systems. In some embodiments, the electrical energy storage system may comprise one or more electrical generators which may provide electrical power to the motor 10 either directly or via the energy storage device. In one example, the electrical generator is driven by an internal combustion engine such as a gas turbine engine.

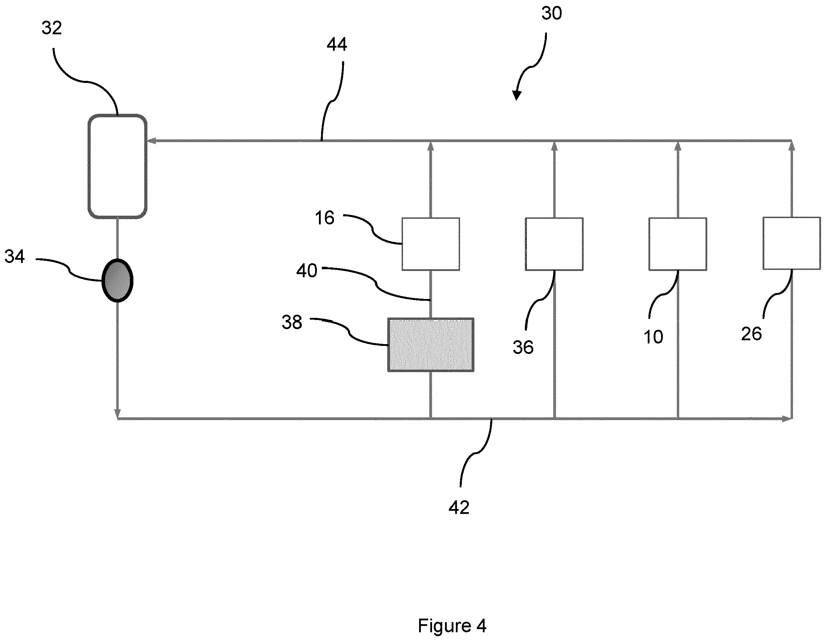

Figure 4 illustrates an oil system 30 of the propulsion system 5. The oil system is configured to provide cooling and, in some cases, lubrication, to various components of the propulsion system 5.

The oil system comprises an oil reservoir 32 configured to store oil for the oil system. Oil from the oil reservoir is pumped from the oil reservoir through the system by an oil pump 34. The oil system is a closed system, in which oil is provided from the reservoir, pumped through various oil cooled systems, and then returned to the reservoir for further use.

Among the systems provided with oil in the oil system is the reduction gearbox 16. The reduction gearbox has a requirement for a low oil temperature during operation. In one example, the reduction gearbox comprises journal bearings, which rotatably mount the planet gears 20. Such bearings may typically require an operational temperature below 80° Celsius. In other cases, the journal bearings may require a temperature below 120° Celsius. Further components such as power electronics 36, the motor 10 and energy storage system 26 also require oil cooling. However, these components typically need cooling to a lesser degree than the reduction gearbox 16, and may need cooling to a higher temperature. For example, the further components may tolerate oil temperatures up to 180° Celsius in some cases, and may require only lubrication, rather than active oil cooling. Such rotating components typically utilise roller or ball bearings, and as such do not typically require oil cooling in use.

In a conventional system, an oil cooler may be provided upstream of the oil cooled components to cool the oil to each of the components. However, in view of the very low temperature requirements of the reduction gearbox, cooling all of the oil to such a low temperature would require a large oil cooler, which may introduce a large degree of weight and drag. This is especially problematic where the motor is driven by energy provided by an energy storage unit such as an electric battery, since no fuel is available to act as a heat sink.

Consequently, in the present disclosure, a dedicated air-cooled oil-cooler 38 is provided upstream of the reduction gearbox 16 oil flow via a first feed line 40, to provide cooling only to the reduction gearbox 16. A line 42 provides oil to the air-cooled oil-cooler 38 and to the further oil cooled components 36, 10, 26 in parallel. In some cases, two or more of the further oil-cooled components 36, 10, 26 may be provided in parallel with each other. In the present invention, no additional oil cooler is provided, and the oil is provided to the oil cooled components 36, 10, 26 at approximately the temperature at the outlet of the oil pump 34. Since the components 36, 10, 26 can tolerate a higher temperature than the reduction gearbox 16, excessive cooling is avoided. Consequently, a smaller quantity of oil is actively cooled upstream of the oil-cooled components 16, 36, 10, 26 compared to a conventional system.

The air-cooled oil-cooler 38 is in the form of a surface air cooler as is well known in the art. The surface air-cooler 38 may be provided within a bypass duct adjacent a gas-washed surface of a nacelle (not shown) enclosing the propulsion system 5. The oil cooler comprises one or more passages adjacent a gas washed surface of the oil cooler through which oil flows, to exchange heat with the airstream. As such, oil within the oil system is cooled by ambient air flow in flight. In alternative configurations, the air-cooled oil-cooler could comprise a matrix cooler, in which a plurality of air passages are provided in thermal contact with a plurality of oil passages to increase the heat exchange surface area. However, such arrangements may be less desirable in some applications, as they may result in increased drag.

Downstream of each of the oil-cooled components 16, 36, 10, 26 is an oil return line 44. Heated oil from each of the components is provided to the oil return line. in some cases, individual oil return lines may be provided, or each oil-cooled component 16, 36, 10, 26 may feed into a single oil return line 44.

The oil is then returned to the tank 32. At least some of the oil has been cooled by the surface oil cooler prior to being provided to the reduction gearbox 16. Since the reduction gearbox requires a relatively low temperature oil supply, the oil exhausted from the reduction gearbox 16 is at a relatively low temperature. This oil is then mixed in with the waste oil from the other oil-cooled components 36, 10, 26, such that the oil temperature returned to the reservoir 32 is at a lower temperature than the oil exhausted from the other oil-cooled components 36, 10, 26. Consequently, cooling is provided to these components, even though an oil cooler is not provided in the direct flow path of these components. Additionally, the oil may cool somewhat while stored in the reservoir.

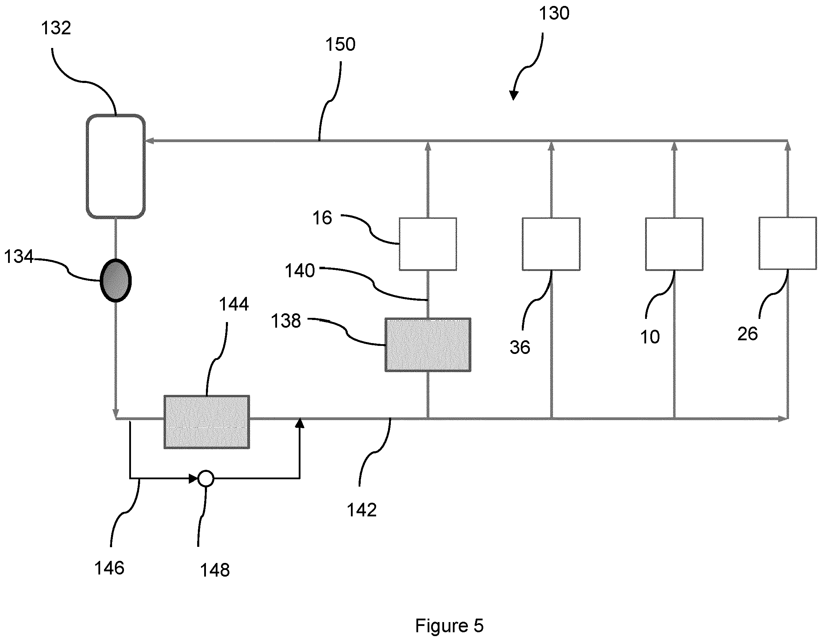

Figure 5 shows an alternative oil system 130 for the propulsion system 5. The system 130 is similar to the system 5, but includes an additional auxiliary heat exchanger 144.

The system 130 comprises a reservoir 132, oil pump 134, feed and return lines 140, 142, 150 and air-cooled oil-cooler138, each of which are arranged in a similar manner to the equivalent components in the first embodiment. However, an additional auxiliary heat exchanger in the form of a second air-cooled oil-cooler 144 is provided upstream of the second feed line and downstream of the reservoir 132. The second air-cooled oil-cooler provides additional cooling to the oil when oil temperatures exceed a maximum oil temperature for one or more of the further oil-cooled components 36, 10, 26. A bypass line 146 controlled by a bypass valve 148 is also provided for bypassing the second air-cooled oil-cooler 144 when additional cooling is not required.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. An oil system (30) for an aircraft propulsion system (5), the aircraft propulsion system comprising:
a motor (10) configured to drive a propulsor (12) via a reduction gearbox (16), wherein the oil system comprises:
a first feed line (40) configured to supply cooling oil to an oil cooled component comprising the reduction gearbox (16);
a second feed line (42) configured to supply cooling oil to a further oil cooled component (36, 10, 26); and
an air-cooled oil cooler (38); wherein
the air-cooled oil cooler (38) is provided upstream of the first feed line (40) to provide cooled oil to the reduction gearbox (16); and
the second feed line (42) is configured to bypass the air-cooled oil cooler (38) to cool the further oil cooled component (36, 10, 26).

2. An oil system according to claim 1, wherein the oil system (30) comprises a closed-loop oil system comprising an oil reservoir (32).

3. An oil system according to claim 2, wherein the oil system (30) comprises a return line (44) configured to provide heated oil from one or more oil cooled component (16, 36, 10, 26) to the oil reservoir (32).

4. An oil system according to any of the preceding claims, wherein the oil system (30) comprises an oil pump (34) configured to provide oil flow through the system

5. An oil system according to any of the preceding claims, wherein the oil system comprises an auxiliary heat exchanger (144) provided upstream of the first and second feed line (40, 42), and configured to cool one or more oil cooled components (10, 16, 24, 36).

6. An oil system according to claim 5, wherein the auxiliary heat exchanger (144) comprises a bypass line (146) arranged to optionally bypass oil flow around the auxiliary heat exchanger (144).

7. An oil system according to any of the preceding claims, wherein the air-cooled oil cooler (38) comprises a surface oil cooler (38).

8. An aircraft propulsion system (5) comprising an oil system (5) according to any of the preceding claims.

9. An aircraft propulsion system according to claim 8, wherein the reduction gearbox (16) comprises an epicyclic gearbox such as a planetary or a star gearbox.

10. An aircraft propulsion system according to claim 9, wherein the epicyclic gearbox (16) comprises a sun gear (18), a plurality of planet gears (20) and a ring gear (24), wherein the sun gear (18) intermeshes with the planet gears (20), and the planet gears (20) intermesh with the ring gear (24).

11. An aircraft propulsion system according to claim 10, wherein the planet gears (20) are rotatably mounted to a planet carrier (22) by a respective oil lubricated journal bearing (23).
